Europäisches Patentamt

European Patent Office

Office européen des brevets

(19)

(11) Veröffentlichungsnummer: **0 071 737**
**B1**

(12) **EUROPÄISCHE PATENTSCHRIFT**

(45) Veröffentlichungstag der Patentschrift:
25.09.85

(21) Anmeldenummer: 82105644.7

(22) Anmeldetag: 25.06.82

(51) Int. Cl.⁴: **H 02 G 15/076**

(54) Endverzweiger für Fernmeldekabel, insbesondere für Freiluftkabel (Dropwire-Kabel).

(30) Priorität: 24.07.81 DE 8121721 U

(43) Veröffentlichungstag der Anmeldung:
16.02.83 Patentblatt 83/7

(45) Bekanntmachung des Hinweises auf die Patenterteilung:
25.09.85 Patentblatt 85/39

(84) Benannte Vertragsstaaten:
AT BE CH FR GB IT LI LU NL SE

(56) Entgegenhaltungen:
DE - B - 1 109 236
FR - A - 1 069 451
FR - A - 2 205 756
FR - A - 2 440 636

(73) Patentinhaber: KRONE GmbH, Goerzallee 311,
D-1000 Berlin 37 (DE)

(72) Erfinder: Radelow, Wolfgang, Stubenrauchstrasse 26,
D-1000 Berlin 47 (DE)
Erfinder: Gerke, Dieter, Allmendeweg 107,
D-1000 Berlin 27 (DE)
Erfinder: Müller, Manfred, Schwedenstrasse 3A,
D-10900 Berlin 65 (DE)

(74) Vertreter: Patentanwälte Beetz sen. - Beetz jun. Timpe -
Siegfried - Schmitt-Fumian, Steinsdorfstrasse 10,
D-8000 München 22 (DE)

EP 0 071 737 B1

ACTORUM AG

## Beschreibung

Die Erfindung betrifft einen wettersicheren Endverzweiger mit Überspannungsschutz für Fernmeldekabel.

Das löt-, schraub- und abisolierfreie Anschliessen von isolierten Leiterdrähten an Klemmkontakte mit der Bezeichnung LSA-Anschlusstechnik hat mittlerweile eine weite Verbreitung gefunden.

Aus der DE-C-2 610 461 ist ein Anschlusselement bekannt, das einen Leiter kontaktiert, indem dieser zwischen zwei Schenkeln einer Blattfeder, die unter 45° zur Leiterachse steht, eingeführt wird.

Im eingedrückten Zustand werden die beiden Schenkel der Blattfeder aus ihrer ursprünglichen Ebene relativ gegeneinander ausgelenkt, so dass diese an versetzten Stellen die Drahtisolation durchschneiden und den Draht an je einer der diagonal gegenüberliegenden Innenkanten der beiden Schenkel kontaktieren.

An einigen bisher bekannten Endverzweigern für Freiluftkabel (Dropwire-Kabel) müssen die Kabeladern und Dropwire-Kabel angelötet oder an Schraubklemmen angelegt werden.

Umständlich mussten in diesem Fall bei Prüfungen an den Kabeln die Schraubklemmen gelöst und die Drähte entfernt werden.

Aus der FR-A-2 440 636 ist ein Endverzweiger für Fernmeldekabel, insbesondere für Freiluftkabel (Dropwire-Kabel), mit Überspannungsableitermagazinen bekannt, dessen Gehäuse einen ersten Anschlussraum für eine erste Anschlussleiste mit Anschlusselementen zum löt-, schraub- und abisolierfreien Anschluss von Adern eines in den Endverzweiger eingeführten Zuführungskabels und einen zweiten Anschlussraum für eine zweite Anschlussleiste mit Anschlusselementen zum löt-, schraub- und abisolierfreien Anschluss von nach unten abgehenden Freiluftkabeln (Dropwire-Kabeln) sowie elektrische Verbindungen zwischen den Anschlusselementen in beiden Anschlussräumen aufweist. Die beiden Anschlussräume sind durch eine Trennwand getrennt. Auf Einzelheiten der löt-, schraub- und abisolierfreien Anschlusselemente geht die FR-A-2 440 636 nicht ein.

Weiter ist es aus der DE-B-1 109 236 bei einem Kabelendverschluss bekannt, für eine Anschlussleiste eine steckbare Halterung in einem Anschlussraum vorzusehen.

Ausserdem ist es aus der FR-A-2 205 756 bekannt, den Schlitz eines Anschlusselements stufenförmig auszubilden.

Gegenseitiges Versetzen von Anschlusselementen in einer Fernmeldekabelarmatur ist aus der FR-A-1 069 451 bekannt.

Schliesslich ist es aus der DE-B-1 109 236 bekannt, die Gehäuseteile von Fernmeldekabelarmaturen aus Kunststoff zu fertigen.

Der Erfindung liegt die Aufgabe zugrunde, einen Endverzweiger für Fernmeldekabel, insbesondere für Freiluftkabel (Dropwire-Kabel), die eine leitende und tragende Funktion übernehmen und einen grossen Drahtquerschnitt besitzen, zu entwickeln, bei dem eine spezielle LSA-Technik anwendbar ist, der Kabelanschlussraum vergiessbar ist, die Freiluftkabel-Anschlusselemente einen verbesserten Anschluss von Kabeln unterschiedlicher Durchmesser ermöglichen und das Zuführungskabel wahlweise von oben oder von unten einführbar ist.

Die Erfindung betrifft somit einen Endverzweiger für Fernmeldekabel, insbesondere für Freiluftkabel (Dropwire-Kabel), mit Überspannungsableitermagazinen, dessen Gehäuse einen ersten Anschlussraum für eine erste Anschlussleiste mit Anschlusselementen zum löt- schraub- und abisolierfreien Anschluss von Adern eines in den Endverzweiger eingeführten Zuführungskabels und einen zweiten Anschlussraum für eine zweite Anschlussleiste mit Anschlusselementen zum löt-, schraub- und abisolierfreien Anschluss von nach unten abgehenden Freiluftkabeln (Dropwire-Kabeln) sowie elektrische Verbindungen zwischen den Anschlusselementen beider Anschlussräume aufweist.

Die vorstehend genannte Aufgabe wird bei diesem Endverzweiger erfindungsgemäss dadurch gelöst,

a) dass die erste Anschlussleiste an das Gehäuse angeformt ist,

b) dass die zweite Anschlussleiste im vorderen Bereich des Gehäuses mit Hilfe von Rastelementen aufgerastet ist,

c) dass die Anschlusselemente unter einem Winkel von 45° zu den Achsen der angeschlossenen Kabeladern bzw. Kabel stehen,

d) wobei die Anschlusselemente der ersten Anschlussleiste parallel zur Längsachse des Endverzweigers angeordnet sind,

e) dass die Schlitze der in der zweiter Anschlussleiste angeordneten Anschlusselemente zum Durchschneiden der Drahtisolation stufenförmig ausgebildet und

f) mit eine Führungsschlitzverjüngung aufweisenden Führungsrippen versehen sind und

g) dass das Zuführungskabel in einer Stellung einer mit dem Einführungsstutzen für dieses Kabel versehenen, symmetrisch aufgebauten, zentralen Gehäuseschale von unten und in einer um 180° umgesetzten Stellung der Schale von oben in den Endverzweiger einführbar ist.

Durch die erfindungsgemässe Gestaltung werden insbesondere folgende Vorteile erreicht:

1. Das Zuführungskabel sowie Dropwire-Kabel unterschiedlicher Durchmesser können abisolierfrei sicher angeschlossen werden.

2. Das Zuführungskabel ist sowohl von oben als auch von unten in das Endverzweigergehäuse einführbar, ohne dass die unteren Abgänge der Dropwire-Kabel beeinflusst werden.

Vorteilhafte weitere Ausgestaltungen einzelner Massnahmen gemäss der Erfindung sind in den Unteransprüchen gekennzeichnet.

Im folgenden wird die Erfindung anhand des in der Zeichnung dargestellten Ausführungsbeispieles näher erläutert; darin zeigen:

Fig. 1 die Hauptansicht des Endverzweigers, wobei der rechte Teil die Vorder- und der linke Teil die Hinteransicht zeigen;

Fig. 2 die Seitenansicht des Endverzweigers mit den beiden Kabelabschlussräumen, wobei das Zuführungskabel von oben eingeführt ist;

Fig. 3 das bei dem Endverzweiger eingesetzte LSA-Anschlusselement mit stufenförmigem Schlitz;

Fig. 3a die Draufsicht nach Fig. 3; und

Fig. 3b den Schnitt A-A nach Fig. 3a.

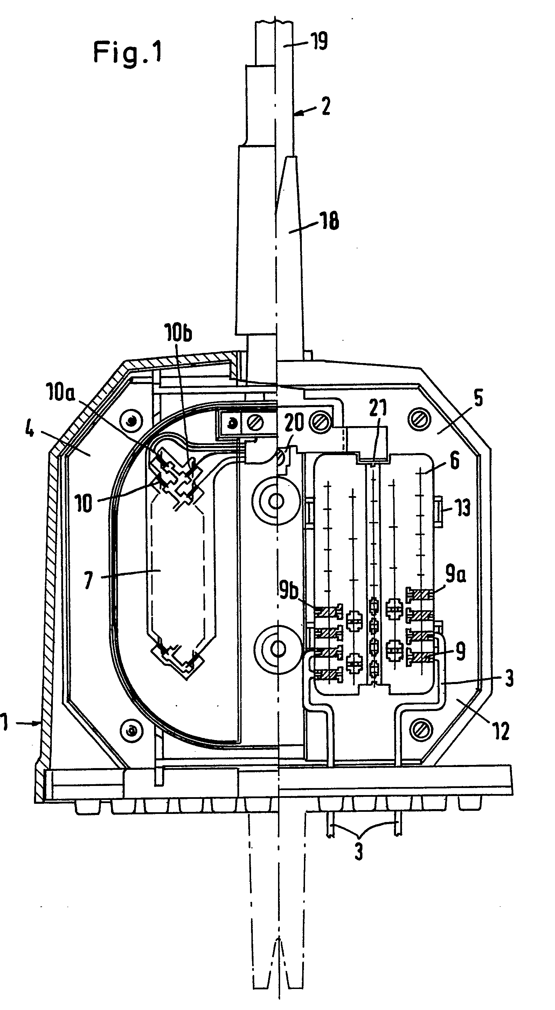

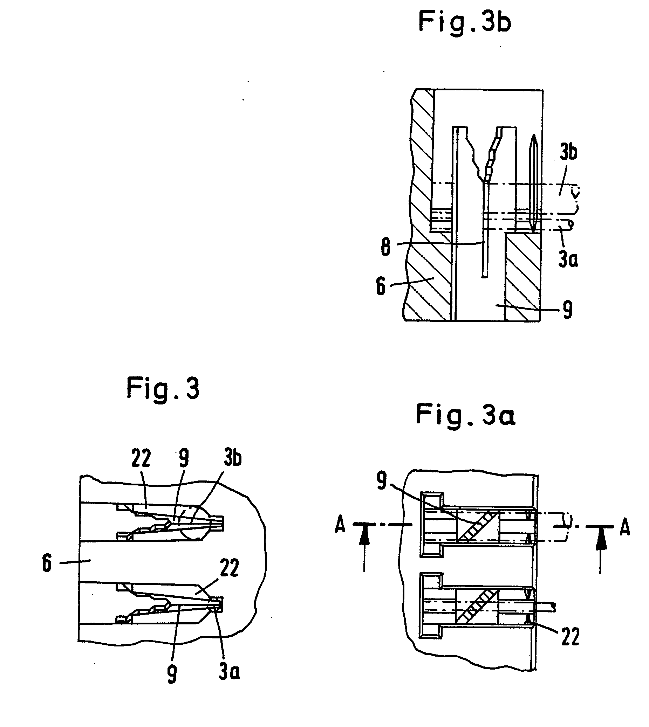

Der rechteTeil der Fig. 1 zeigt die im vorderen Abschlussraum 5 angeordnete Anschlussleiste 6 mit den in Fig. 3 dargestellten Anschlusselementen 9 zum Anschluss der Dropwire-Kabel 3.

Nach Bestücken der Anschlusselemente 9 wird die Anschlussleiste 6 auf die Vorderseite 12 der zentralen Gehäuseschale 15 mit Hilfe von Rastelementen 13 aufgerastet.

Die in den Fig. 3, 3a und 3b dargestellten Schlitze 8 der in der Anschlussleiste 6 angeordneten Anschlusselemente 9 sind stufenförmig ausgebildet; dies ermöglicht, dass sehr harte und dicke Isolierungen der Dropwire-Kabel 3 mit geringen Kräften durchgeschnitten werden.

Die Fig. 3, 3a, 3b zeigen hierbei, dass die anschliessbaren Dropwire-Kabel 3 bei annähernd gleichem Leiterdurchmesser für verschiedene Verwendungszwecke unterschiedlich dicke Isolierungen aufweisen können. Durch die nach unten zulaufenden Führungsrippen 22 werden dünne Kabel 3a in die Führungsschlitzverjüngung hineingeführt und gegen Erschütterung gesichert. Auch die dicken Kabel 3b, die oberhalb der Schlitzverjüngung liegen, werden gegen Erschütterungen gesichert.

In der Mitte dieser Dropwire-Anschlussleiste 6 kann in bekannter Weise ein Überspannungsableitermagazin 14 aufgesteckt werden.

Wie die Fig. 1 zeigt, liegen sich die linken und rechten Anschlusselemente 9a, 9b der Anschlussleiste 6 nicht gegenüber; sie sind versetzt angeordnet. Dadurch ist trotz grösserer Masse der Anschlusselemente eine Verwendung der handelsüblichen Überspannungsableiter aus dem LSA-Programm möglich.

Die linke Seite der Fig. 1 zeigt den hinteren Kabelabschlussraum 4 des Endverzweigers 1.

Es sind die bekannten Anschlusselemente 10 für das Zuführungskabel 2 dargestellt. Die Anschlussleiste 7 ist an der zentralen Gehäuseschale 15 im Kabelabschlussraum 4 angeformt. Die notwendigen Schlitze für die Kontaktfahnen sind mit sogenannten Spritzhäuten (nicht dargestellt) verschlossen, die die Anschlusselemente 10 im Gehäuse abdichten.

Durch eine Schrägstellung der Kabelzuführung ist es möglich, die Anschlusselemente 10a, 10b parallel zur in Fig. 1 strichliert gezeichneten Längsachse des Endverzweigers 1 anzuordnen, um so eine wesentliche Vereinfachung der Anschlusselemente 10 zur erhalten, ohne die bewährte Schrägstellung dieser zur Aderachse zu verlassen.

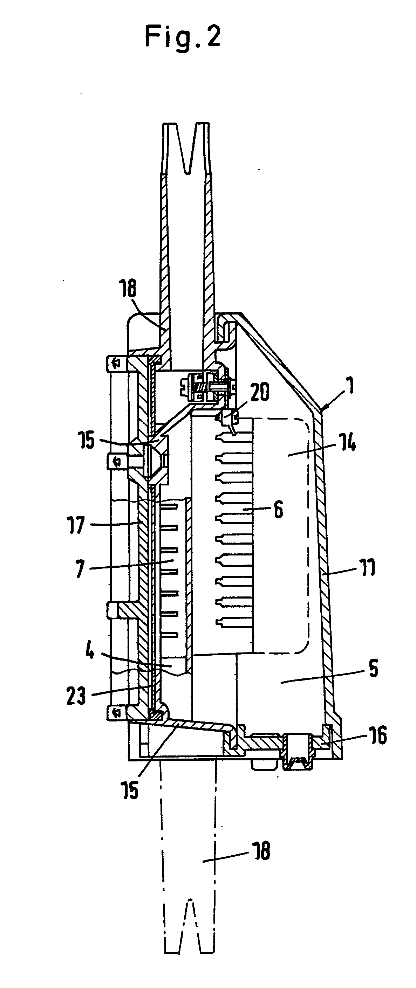

Die Fig. 2 zeigt die einzelnen Bauteile des Endverzweigers 1, zu dem eine Haube 11, die zentrale Gehäuseschale 15, eine Rückwand 17, eine Bodenplatte 16 und eine Dichtung 23 gehören.

Die zentrale Gehäuseschale 15 mit dem Einführungsstutzen 18 ist symmetrisch aufgebaut, so dass die Bodenplatte 16 mit den abgehenden Dropwire-Kabel-Ausgängen an beiden Stirnseiten der Gehäuseschale 15 montiert werden kann und damit das Zuführungskabel 2 von oben und die Dropwire-Kabel 3 von unten oder sowohl das Zuführungskabel 2 als auch die Dropwire-Kabel von unten zuführbar sind.

Es besteht die Möglichkeit, den hinteren Kabelabschlussraum 4 mittels der Dichtung 23 abzudecken. Diese auf das Gehäuse aufknöpfbare Dichtung 23 besitzt zwei unsymmetrische, abschneidbare Einfüllöffnungen für den Verguss des Abschlussraumes 4. Je nach Montage der Dichtung — Einfüllöffnungen oben bzw. unten — ist ein Voll- oder nur ein Teilverguss (nur Kabelstutzenbereich) möglich. Die Dichtung 23 verhindert ein Eindringen von Feuchtigkeit in den Kabelabschlussraum.

Der Kabelmantel 19 ist im Kabelabschlussraum 4 elektrisch mit den im vorderen Abschlussraum 5 angeordneten Erdanschlüssen 20 sowie mit den Abgriffahnen 21 der Anschlussleisten 6 verbunden.

Der Endverzweiger 1 wird nach Einführen des Zuführungskabels 2 an der bereits am Mast oder an einer Wand befestigten Rückwand 17 angeschraubt, oder es werden die Gehäuseschale 15 und die Rückwand 17 nach Montage beider Teile zusammen am Mast oder an der Wand befestigt.

Nach Aufschieben der Haube 11 ist der Endverzweiger 1 gegen Regenwasser durch bekannte konstruktive Massnahmen, wie Ablaufschrägen, Ableitrippen, geschützt, so dass keine Beschädigung der Einbauten möglich ist.

**Patentansprüche**

1. Endverzweiger für Fernmeldekabel, insbesondere für Freiluftkabel (Dropwire-Kabel), mit Überspannungsableitermagazinen, dessen Gehäuse einen ersten Anschlussraum (4) für eine erste Anschlussleiste (7) mit Anschlusselementen (10) zum löt- schraub- und abisolierfreien Anschluss von Adern eines in den Endverzweiger eingeführten Zuführungskabels (2) und einen zweiten Anschlussraum (5) für eine zweite Anschlussleiste (6) mit Anschlusselementen (9) zum löt-, schraub- und abisolierfreien Anschluss von nach unten abgehenden Freiluftkabeln (Dropwire-Kabeln) (3) sowie elektrische Verbindungen zwischen den Anschlusselementen (9, 10) beider Anschlussräume (4, 5) aufweist, dadurch gekennzeichnet,

a) dass die erste Anschlussleiste (7) an das Gehäuse angeformt ist,

b) dass die zweite Anschlussleiste (6) im vorderen Bereich des Gehäuses mit Hilfe von Rastelementen (13) aufgerastet ist,

c) dass die Anschlusselemente (10a, 10b; 9a, 9b) unter einem Winkel von 45° zu den Achsen der angeschlossenen Kabeladern bzw. Kabel stehen,

d) wobei die Anschlusselemente (10a, 10b) der ersten Anschlussleiste (7) parallel zur Längsachse des Endverzweigers (1) angeordnet sind,

e) dass die Schlitze (8) der in der zweiter Anschlussleiste (6) angeordneten Anschlusselemente (9a, 9b) zum Durchschneiden der Drahtisolation stufenförmig ausgebildet und

f) mit eine Führungsschlitzverjüngung aufweisenden Führungsrippen (22) versehen sind und

g) dass das Zuführungskabel (2) in einer Stellung einer mit dem Einführungsstutzen (18) für dieses Kabel versehenen, symmetrisch aufgebauten zentralen Gehäuseschale (15) von unten und in einer um 180° umgesetzten Stellung der Schale (15) von oben in den Endverzweiger (1) einführbar ist.

2. Endverzweiger nach Anspruch 1, dadurch gekennzeichnet, dass linke und rechte Anschlusselemente (9a, 9b bzw. 10a, 10b) jeder Anschlussleiste (6 bzw. 7) zueinander versetzt angeordnet sind.

3. Endverzweiger nach Anspruch 1, dadurch gekennzeichnet, dass die einzelnen Gehäuseteile, wie zentrale Gehäuseschale (15), Haube (11), Rückwand (17), Bodenplatte (16) und die Anschlussleistenkörper (6, 7) aus Kunststoff bestehen.

## Claims

1. A distribution head for a telecommunication cable, especially for an overhead cable (dropwire cable), including overvoltage arrester magazines, the housing of said distribution head comprising a first connecting space (4) for a first terminal strip (7) including terminal elements (10) for solderless, stripless and unscrewed termination of wires of a feeder cable (2) inserted into the distribution head, and comprising a second connecting space (5) for a second terminal strip (6) including terminal elements (9) for solderless, stripless and unscrewed termination of downwardly outgoing overhead cables (dropwire cables), and comprising electrical connections between the terminal elements (9, 10) of both connecting spaces (4, 5), characterised in

a) that the first terminal strip (7) is integrally formed with the housing,

b) that the second terminal strip (6) is latched to the front portion of the housing by means of latching members (13),

c) that the terminal elements (10a, 10b; 9a, 9b) extend at an angle of 45°C to the axes of the terminated cable wires or cables respectively,

d) wherein the terminal elements (10a, 10b) of the first terminal strip (7) are disposed in parallel to the longitudinal axis of the distribution head (1),

e) that the slots (8) of the terminal elements (9a, 9b) mounted in the second terminal strip (6) are of stepped configuration for severing the wire insulation and

f) are provided with guide ribs (22) formed with a guide slot taper, and

g) that the feeder cable (2) in one position of a symmetrically configured, central housing shell (15), which is provided with the insertion fitting (18) for this cable, is insertable from the bottom and in another position of the housing shell (15) reversed by 180° the feeder cable (2) is insertable from the top into the distribution head (1).

2. A distribution head as claimed in claim 1, characterised in that left and right terminal elements (9a, 9b and 10a, 10b, respectively) of each terminal strip (6 and 7, respectively) are arranged in offset relationship.

3. A distribution head as claimed in claim 1, characterised in that the individual body parts such as central housing shell (15), hood (11), rear wall (17), bottom panel (16) and the terminal strip bodies (6, 7) are made of plastics material.

## Revendications

1. Ramificateur de terminaison pour câble de télécommunication, en particulier pour câble aérien (câble «dropwire»), avec parafoudre, qui présente, dans un boîtier, un premier espace de raccordement (4) pour une première barrette de raccordement (7), avec des éléments de raccordement (10), en vue du raccordement sans soudure, vissage ni dénudage de fils, des conducteurs d'un câble d'amenée (2) introduit dans le ramificateur de terminaison et un second espace de raccordement (5) pour une deuxième barrette de raccordement (6), avec des éléments de raccordement (9), pour le raccordement sans soudure, vissage ni dénudage des fils de câbles aériens (câbles «dropwire») (3) partant vers le bas, ainsi que des connexions électriques entre les éléments de raccordement (9, 10) des deux espaces de raccordement (4, 5), caractérisé en ce que

a) la première barrette de raccordement (7) est formée d'une pièce dans le boîtier,

b) la deuxième barrette de raccordement (6) est fixée par emboîtement dans la partie antérieure du boîtier, à l'aide d'éléments d'emboîtement (13).

c) les éléments de raccordement (10a, 10b; 9a, 9b) sont disposés sous un angle de 45° par rapport à l'axe des conducteurs du câble, ou du câble raccordé,

d) les éléments de raccordement (10a, 10b) de la première barrette de raccordement (7) sont disposés parallèlement à l'axe longitudinal du ramificateur de terminaison (1),

e) les fentes (8) des éléments de raccordement (9a, 9b) disposées dans la deuxième barrette de raccordement (6) présentent une forme en gradins, permettant de trancher l'isolation du fil, et

f) elles sont pourvues de nervures de guidage (22), présentant un rétrécissement de la fente de guidage et

g) le câble d'amenée (2) peut être introduit dans le ramificateur de terminaison (1) par le dessous dans une position d'une coquille du boîtier central (15) pourvue d'une tubulure d'introduction (18) construite de façon symétrique et, par le dessus, dans une position inversée à 180° de cette coquille (15).

2. Ramificateur de terminaison, selon la revendication 1, caractérisé en ce que les éléments de raccordement de gauche et de droite (respectivement 9a, 9b et 10a, 10b) de chaque barrette de raccordement (6, 7) sont disposés avec décalage les uns par rapport aux autres.

3. Ramificateur de terminaison selon la revendication 1, caractérisé en ce que les différents éléments de boîtier tels que la coquille centrale (15), la coiffe (11), la paroi arrière (17), la plaque de base (16) et les corps des barrettes de raccordement (6, 7) sont construits en matière plastique .

Fig.1

# Fig.2

## Fig.3b

## Fig.3

## Fig.3a